# EUROPÄISCHE PATENTSCHRIFT

(11) **EP 1 951 398 B1**
(45) Veröffentlichungstag und Bekanntmachung des Hinweises auf die Patenterteilung: **11.03.2009**
(21) Anmeldenummer: 06742926.6
(22) Anmeldetag: 16.05.2006
(51) Int. Cl.: B01D 29/15, B01D 35/30, B01D 35/147

(54) **ÖLFILTERANORDNUNG**
OIL FILTER ARRANGEMENT
SYSTEME DE FILTRATION D'HUILE

(30) Priorität: 02.09.2005 DE 102005042715
(43) Veröffentlichungstag der Anmeldung: 06.08.2008
(73) Patentinhaber: Joma-Polytec Kunststofftechnik GmbH, 72411 Bodelshausen (DE)
(72) Erfinder: PFITZER, Friedhelm, 72414 Rangendingen (DE); MAUTE, Alexander, 72379 Hechingen-Stetten (DE); JUNGMANN, Peter, 72406 Bisingen (DE)
(74) Vertreter: Bulling, Alexander
(86) Internationale Anmeldenummer: PCT/EP2006/004578
(87) Internationale Veröffentlichungsnummer: WO 2007/028425

(56) Entgegenhaltungen:
- EP-A- 1 281 426
- WO-A-02/078816
- BE-A3- 1 011 567
- US-A1- 2004 164 017

## Beschreibung

Die Erfindung betrifft eine Ölfilteranordnung mit einem Gehäuse, das einen Aufnahmeraum für ein in das Gehäuse einsetzbares, radial mit Öl durchströmbares Filterelement aufweist, mit einem bei eingesetztem Filterelement das Filterelement tragenden Stützrohr und mit einem Deckel, der über ein Gewinde auf das Gehäuse aufschraubbar ist.

Derartige Ölfilteranordnungen sind in vielfältiger Art und Weise bekannt.

Aus der US 2004/0164017 A1 und der WO 02/078816 A1 ist jeweils eine Ölfilteranordnung bekannt geworden, bei der ein Filterelement beim Aufschrauben des Deckels wenigstens bedingt mitverdreht wird.

Aus der EP 1 281 426 A1 ist eine Ölfilteranordnung bekannt geworden, bei der ein das Filterelement aufnehmendes Stützrohr deckelseitig angeordnet ist und deshalb beim Verdrehen des Deckels mitverdreht wird.

Aus der DE 198 59 960 A1 ist beispielsweise bekannt geworden, dass Filterelement samt Deckelelement beim Wechseln des Filterelements aus dem Aufnahmeraum herauszunehmen.

In der Praxis hat sich herausgestellt, dass nach längerem Einsatz des Filterelements insbesondere aufgrund der hohen Öltemperaturen ein Festbacken des Filterelements am Gehäuse, am Stützrohr und/oder einem anderen, sich am Gehäuse und/oder am Stützrohr abstützenden Bauteil auftreten kann. Ein Herausnehmen des Filterelements beim Filterelementwechsel aus dem Gehäuse ist dann nur erschwert möglich.

Der vorliegenden Erfindung liegt die Aufgabe zugrunde, eine Öifilteranordnung der eingangs beschriebenen Art derart weiterzubilden, dass ein Herausnehmen und/oder Wechseln des Filterelements auf einfache Art und Weise möglich ist.

Insbesondere soll ein Filterelementwechsel auch bei sich am Stützrohr und/oder Gehäuse festgesetztem Filterelement möglich sein.

Diese Aufgabe wird durch eine Ölfilteranordnung mit den Merkmalen des Anspruchs 1 gelöst. Hierdurch wird eine Relativbewegung des Filterelements gegenüber dem Gehäuse beim Auf- und Abschrauben des Deckels erreicht, wodurch ein sich am Gehäuse, oder an einem gehäuseseitigen Bauteil, festgesetztes Filterelement gelöst wird.

Das Stützrohr ist dabei derart am Gehäuse befestigt, dass es beim Austausch des Filterelements im Gehäuse verbleibt. Das Stützrohr kann dazu insbesondere am Gehäuse verrastet, verschraubt und/oder bajonettartig und/oder unlösbar befestigt sein. Bei einer Verrastung sind entsprechende Rastmittel vorzusehen. Bei einer Verschraubung sind entsprechende Gewinde und/oder Schrauben vorzusehen. Bei einer bajonettartigen Befestigung wird das Stützrohr zunächst entlang seiner Längsachse in den Aufnahmeraum eingeführt und dann durch Verdrehen um seine Längsachse mittel entsprechend vorzusehenden Hinterscheidungsabschnitten festgesetzt.

Am zargenartig ausgebildeten Stützrohr sind im oberen und im unteren Endbereich des Filterelements Anlageflächen vorgesehen, an denen das Filterelement dicht anliegt. Insbesondere an diesen Anlageflächen kann es zu einem Festsetzen des Filterelements am Stützrohr kommen:
Ferner ist ein Federelement vorgesehen, das bei eingesetztem Filterelement und aufgeschraubten Deckel das Filterelement gegen den Deckel beaufschlagt. Durch ein derartiges Federelement wird erreicht, dass beim Abschrauben des Deckels das Filterelement wenigstens bedingt angehoben wird, so dass es aus dem Aufnahmeraum leichter entnommen werden kann. Dabei ist denkbar, dass bei eingesetztem Filterelement ein am Boden des Aufnahmeraums vorhandener Drainagekanal verschlossen ist und dass beim Herausnehmen des Filterelements der Drainagekanal geöffnet wird. Das Federelement kann dabei zum Öffnen des Drainagekanals beitragen.

Gemäß einer Weiterbildung der Erfindung ist vorteilhaft, wenn die Mitnahmerippen im radial äußeren Bereich der Deckelinnenseite angeordnet sind und jeweils einen nach radial innen ragenden Mitnahmeabschnitt aufweisen, der bei eingesetztem Filterelement in am Filterelement dafür vorgesehene Aussparungen eingreift. Der Mitnahmeabschnitt kann dabei eine im wesentlichen in axialer Richtung verlaufende Kante aufweisen oder gebogen ausgebildet sein. Insbesondere ist vorteilhaft, wenn mehrere Mitnahmerippen mit Mitnahmeabschnitten am Deckel äquidistant zueinander angeordnet sind. Die einzelnen Mitnahmerippen greifen dann in am Filterelement entsprechend vorgesehene Aussparungen ein.

Gemäß einer weiteren Ausgestaltung der Erfindung können im radial äußeren Bereich der Deckelinnenseite Zentrierrippen mit nach radial innen ragenden Zentrierabschnitten vorgesehen sein, die die dem Deckel zugewandte Seite des Filterelements beim Aufsetzen und/oder beim Einschrauben des Deckel in radialer Richtung zentrieren. Hierdurch wird gewährleistet, dass der dem Deckel zugewandte Teil des Filterelements beim Einschrauben des Filterelements in seine Betriebslage gelangt. Die Zentrierrippen sind dabei vorteilhafterweise separat von den Mitnahmerippen ausgebildet. Dies hat den Vorteil, dass die Mitnahmerippen bei aufgeschraubtem Deckel nicht in axialer Richtung gegen das Filterelement wirken und dessen Funktionsfähigkeit gegebenenfalls beeinträchtigen.

Gemäß einer Weiterbildung der Erfindung können die Zentrierrippen nach axial unten ragende Anlageabschnitte aufweisen, die beim Aufsetzen und/oder beim Einschrauben des Deckels gegen die dem Deckel zugewandte Stirnseite des Filterelements wirken. Hierdurch wird erreicht, dass das Filterelement beim Aufschrauben des Deckels gezielt nach axial unten bewegt werden, bis die Betriebslage des Filterelements erreicht wird.

Eine weitere Ausführungsform der Erfindung sieht vor, dass der Zentrierabschnitt und der Anlageabschnitt einer Zentrierrippe aneinander angrenzend angeordnet sind. Vorteilhafterweise können die beiden Abschnitte senkrecht zueinander angeordnet sein, wobei dann der Anlageabschnitt vorteilhafterweise senkrecht und der Zentrierabschnitt parallel zur Mittellängsachse des Stützrohrs verläuft.

Erfindungsgemäß können die Mitnahmerippen und die Zentrierrippen auch von lediglich einer entsprechend ausgebildeten Rippe gebildet sein. Dadurch minimiert sich die Gesamtanzahl der Rippen.

Erfindungsgemäß kann ferner vorgesehen sein, dass die Mitnahmerippen weiter in die den Boden des Aufnahmeraums zugewandte Axialrichtung ragen als die Zentrierrippen. Dies hat den Vorteil, dass zunächst die Mitnahmerippen in die für sie am Filterelement vorgesehenen Aussparungen eingreifen können, bevor die Zentrierrippen gegen das Filterelement wirken.

Gemäß einer Weiterbildung der Erfindung ist es möglich, dass das Stützrohr oder ein am Stützrohr oder am Gehäuse geführtes Teil einen Anlageabschnitt zur Anlage an der dem Deckel abgewandten Seite des Filterelements aufweist. Für den Fall, dass ein derartiger Anlageabschnitt vorgesehen ist, kann ein ungewolltes Anbacken, beziehungsweise Festsetzen, des Filterelements am Anlageabschnitt beim Abschrauben des Deckels aufgrund des Mitdrehens des Filterelements gelöst werden. Der Anlageabschnitt kann dabei im wesentlichen senkrecht zur Mittellängsachse des Stützrohrs verlaufen.

Erfindungsgemäß kann die Ölfilteranordnung auch ein zugehöriges Filterelement umfassen.

Ein derartiges Filterelement für eine erfindungsgemäße Ölfilteranordnung weist Aussparungen zur Aufnahme der am Deckel der Ölfilteranordnung vorgesehenen Mitnahmerippen auf, wobei die Aussparungen eine Breite aufweisen, die gleich oder geringfügig breiter als die Breite der Mitnahmerippen ist. Hierdurch wird gewährleistet, dass die Mitnahmerippen in die Aussparungen eingeführt werden können.

Dabei ist denkbar, dass eine Aussparung von jeweils zwei in radialer Richtung ragenden Überstände gebildet ist. Dadurch, dass die Aussparungen von den Überständen gebildet werden, wirkt sich das Vorsehen der Aussparungen nicht störend auf die Filterfunktion des Filterelements aus.

Dabei ist denkbar, dass im Bereich einer Aussparung ein in axialer Richtung ragender Einführsteg vorgesehen ist, der einen sich in axialer Verlängerung der Aussparung erstreckenden Einführabschnitte derart aufweist, dass beim Aufschrauben des Deckels eine Mitnahmerippe von dem Einführabschnitt in die zugehörige Aussparung geführt wird. Ein derartiger Einführsteg stellt folglich eine Einführhilfe für die Mitnahmerippe dar. Es kann sichergestellt werden, dass beim Aufschrauben des Deckels die jeweilige Mitnahmerippe in die zugehörige Aussparung gelangt. Insbesondere dann, wenn die Mitnahmerippen in axialer Richtung die Zentrierrippen überragen, wird gewährleistet, dass lediglich die Mitnahmerippen mit dem Einführsteg in wirkverbindung derart treten, dass die Mitnahmerippen in die Aussparungen gelangen können.

Eine weitere bevorzugte Ausführungsform der Erfindung ergibt sich dann, wenn die Überstände und/oder der Einführsteg von einer Endscheibe des Filterelements gebildet wird. Dies hat den Vorteil, dass das eigentliche Filtermaterial unbeeinträchtigt bleibt, weil lediglich an der Endscheibe, die insbesondere aus Kunststoff sein kann, Veränderungen vorgenommen werden.

Weitere Einzelheiten und vorteilhafte Ausgestaltungen der Erfindung sind der nachfolgenden Beschreibung zu entnehmen, anhand derer das in der Figur gezeigte Ausführungsbeispiel näher beschrieben und erläutert wird.

Es zeigen:
- Figur 1: einen Längsschnitt durch ein erfindungsgemäßes Ölfiltermodul;
- Figur 2: eine Vergrößerung der in Figur 1 dargestellten Bereiche II;
- Figur 3: eine Draufsicht auf eine dem Deckel zugewandte Stirnseite eines Filterelements;
- Figur 4: eine Montagelage des Filterelements bei nicht vollständig aufgeschraubtem Deckel; und
- Figur 5: die Betriebslage bei vollständig aufgeschraubtem Deckel.

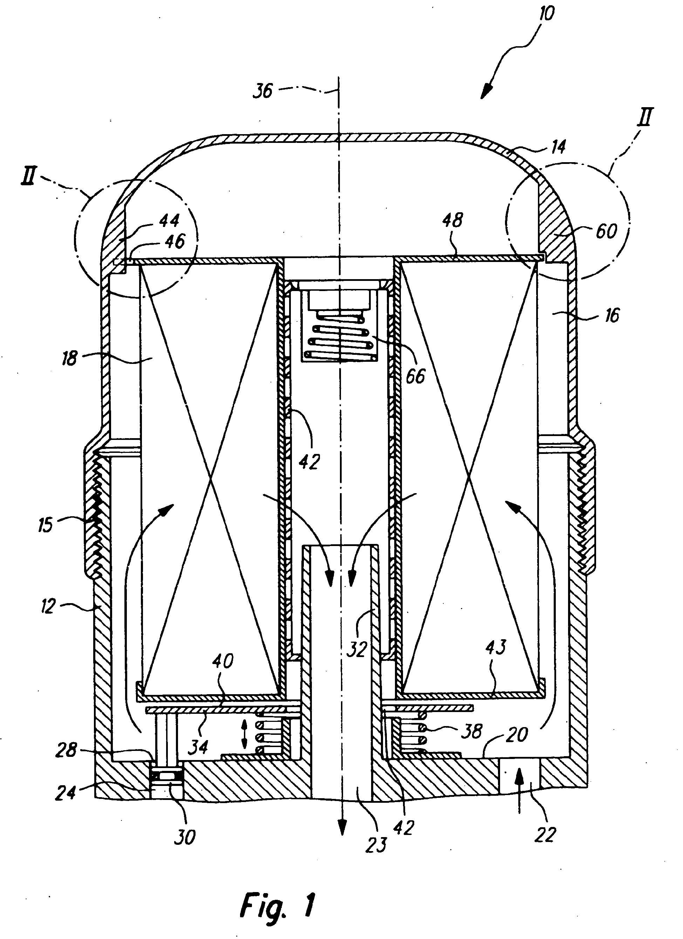

Die in der Figur 1 dargestellte Ölfilteranordnung 10 weist ein Gehäuse 12 und einen auf das Gehäuse 12 über ein Gewinde 15 aufschraubbaren Gehäusedeckel 14 auf. Das Gehäuse 12 sieht einen Aufnahmeraum 16 vor, in dem ein radial von außen nach innen durchströmbares Filterelement 18 angeordnet ist.

Am Boden 20 des Aufnahmeraums 16 ist eine Rohölöffnung 22 vorgesehen, durch die zu filterndes Rohöl in den Aufnahmeraum 16 einfließt. Das gefilterte Rohöl fließt über einen Reinölkanal 23 ab. Ferner ist am Boden 20 ein Drainagekanal 24 vorgesehen, über den im Aufnahmeraum 16 vorhandenes Öl bei Öffnen des Gehäusedeckels 14 bzw. bei Herausnahmen des Filterelements 18 abfließen kann. Der Drainagekanal 24 sieht dabei eine Drainageöffnung 28 vor. In der in der Figur 1 dargestellten Betriebslage der Filteranordnung mit geschlossenem Gehäuse und eingesetztem Filterelement 18 ist die Drainageöffnung 28 von einem Verschlussmittel 30 verschlossen.

Das Verschlussmittel 30 in Form eines Zapfens ist seinerseits an einer auf einem Rohrstutzen 32 axial verschiebbaren Drainageplatte 34 angeordnet. Die Drainageplatte 34 weist einen zentralen Durchbruch 42 auf, über den sie auf den Rohrstutzen 32 aufgesteckt ist. Die sich senkrecht zur Mittellängsachse 36 der Filteranordnung erstreckende Drainageplatte ist dabei in axialer Richtung auf dem Rohrstutzen 32 verschiebbar. Das zapfenartig ausgebildete Verschlussmittel 30 greift dabei in die Drainageöffnung 28, wobei sich der Drainagekanal 26 im Bereich der Drainageöffnung 28 parallel zur Mittellängsachse 36 erstreckt. Dadurch kann gewährleistet werden, dass unabhängig von der Eingriffstiefe des Verschlussmittels 30 in den Drainagekanal 24 ein sicheres Verschließen des Drainagekanals 24 erreicht werden kann.

Die Drainageplatte 34 wird von einer Druckfeder 38 nach oben in Richtung des Gehäusedeckels 14 druckbeaufschlagt. Die Druckfeder 38 stützt sich einerseits an der Drainageplatte 34 und andererseits an einer am Boden 20 vorgesehenen Zwischenhülse 40 ab. Die Zwischenhülse 40 ist dabei in vorteilhafter Weise aus einem metallischen Werkstoff, wobei das Gehäuse 12 aus einem Kunststoff sein kann.

Aufgrund der Federbeaufschlagung der Drainageplatte 34 wird beim Abnehmen des Gehäusedeckels 14 die Drainageplatte nach axial oben bewegt, wodurch das Verschlussmittel 30 die Drainageöffnung 28 freigibt und das im Aufnahmeraum 16 vorhandene Öl über den Drainagekanal 24 abfließen kann. Die Druckfeder 38 ist dabei vorteilhafterweise derart ausgelegt, dass beim Abnehmen des Gehäusedeckels 14 nicht nur die Drainageplatte 34 angehoben wird, sondern auch das Filterelement 18 nach axial oben bewegt wird.

Die Drainageplatte 34, die am gehäuseseitigen Rohrstutzen 32 geführt angeordnet ist, weist auf ihre dem Filterelement 18 zugewandten Oberseite einen Anlageabschnitt 40 zur Anlage der unteren Endseite 43 des Filterelements 18 auf.

Am Gehäuse 12, beziehungsweise am Rohrstutzen 32 ist ein in axialer Richtung öldurchlässiges Stützrohr 42 vorgesehen. Das Filterelement 18 ist bei geöffnetem Deckel 14 in axialer Richtung auf das Stützrohr 42 aufsteckbar. Bei Herausnahme des Filterelements 18 aus dem Aufnahmeraum 16 verbleibt das Stützrohr im Aufnahmeraum 16.

Im Bereich des oberen Endes des Stützrohrs 42 ist ein Überdruckventil 66 angeordnet, das bei Überschreiten eines Grenzdrucks öffnet.

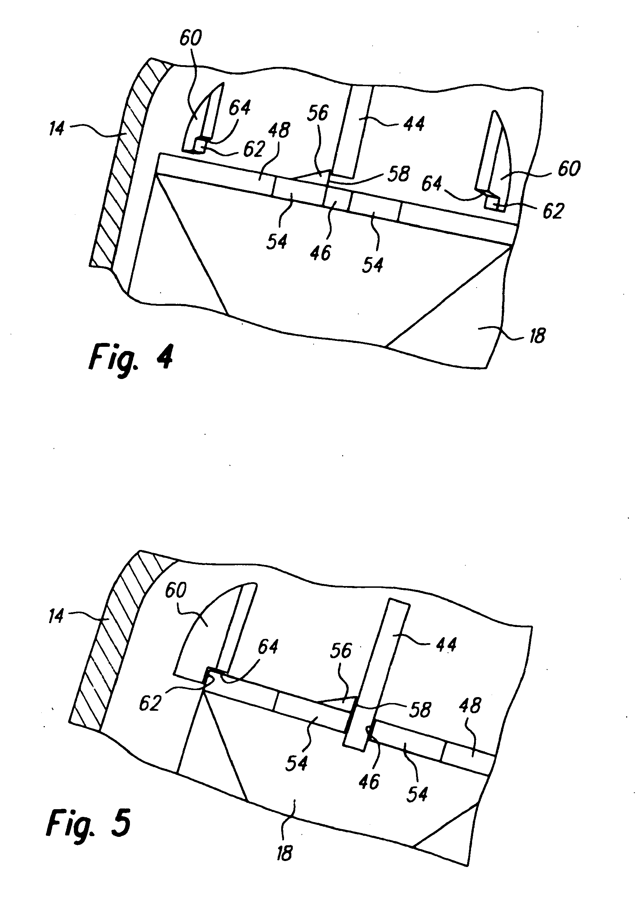

Aufgrund der hohen Temperaturen des zu filternden Öls und der langen Betriebsdauer des Filterelements 18 kann der Fall auftreten, dass das Filterelement 18 am Anlageabschnitt 40 und/oder am Staurohr 42 anbackt. Um ein Lösen des derart festgesetzten Filterelements 18 vom Anlageabschnitt 40 beziehungsweise vom Stützrohr 42 zu erreichen, sind an der Innenseite des Deckels 14 Mitnahmerippen 44 vorgesehen. Die Mitnahmerippen 44 greifen dabei in am Filterelement 18 vorgesehene Aussparungen 46 ein, die insbesondere in der Draufsicht gemäß Figur 4 deutlich zu erkennen sind. Die Aussparungen 46 sind dabei an der oberen Endscheibe 48 des Filterelements angeordnet. Über die Mitnahmerippen 44 und die Aussparungen 46 wird gewährleistet, dass beim Verdrehen des Deckels 14 das Filterelement 18 mit verdreht wird. Dadurch kann das Filterelement 18 vom Anlageabschnitt 40 und vom Staurohr 42 gelöst werden.

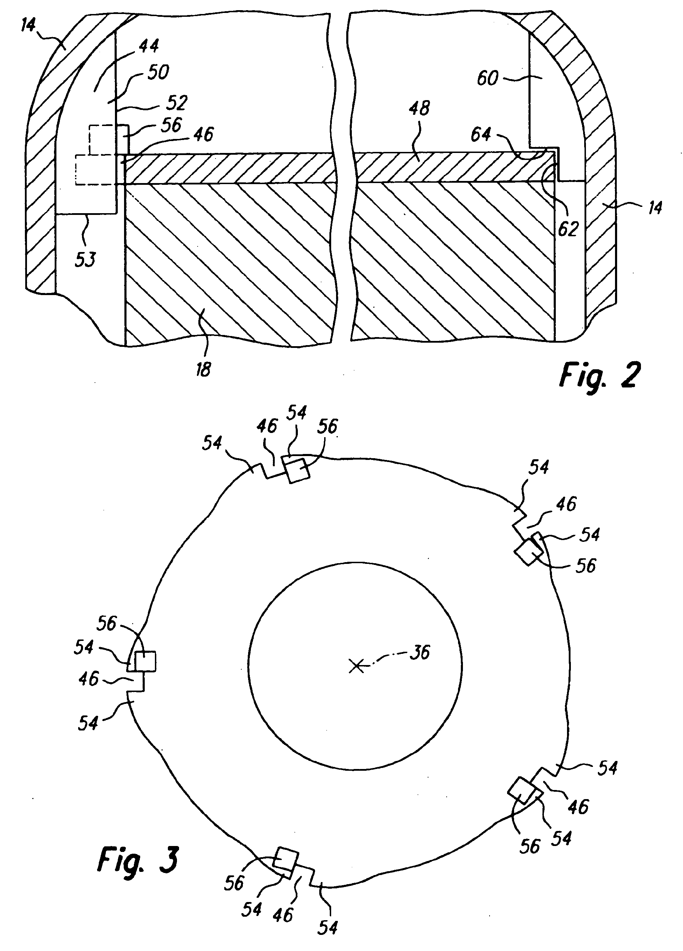

Bei der in den Figuren dargestellten Ausführungsform sind insgesamt fünf Mitnahmerippen 44 vorgesehen, die in die in der Figur 3 dargestellten fünf Aussparungen 46 eingreifen. Die Mitnahmerippen 44 sind dabei im radial äußeren Bereich der Deckelinnenseite angeordnet und weisen jeweils einen nach radial innen ragenden Mitnahmeabschnitt 50 auf. In der Figur 1 und 2 wird der Mitnahmeabschnitt 50 von einer parallel zur Mittellängsachse 36 verlaufenden Kante 52 in nach radial nach innen gewandter Richtung begrenzt. In axialer Richtung wird der Mitnahmeabschnitt 50 von der senkrecht zur Mittellängsachse 36 verlaufenden Kante 53 begrenzt.

Die filterelementseitigen Aussparungen 46 weisen dabei eine Breite auf, die geringfügig breiter als die Breite der jeweiligen Mitnahmerippe 44 ist. Dadurch wird gewährleistet, dass die Mitnahmerippen 44 in die Aussparungen 46 eintauchen können.

Wie insbesondere aus Figur 3 deutlich wird, werden die einzelnen Aussparungen 46 von jeweils zwei in radialer Richtung ragenden Überständen 54 gebildet. Die Überstände 54, gemäß Figur 3 die in Draufsicht eine keilförmige Kontur aufweisen, sind an die in Draufsicht im wesentlichen kreisförmige Kontur der oberen Endscheibe 48 angeformt und stehen in radialer Richtung über das eigentliche Filtermaterial des Filterelements 18 über. Dies hat den Vorteil, dass das eigentliche Filtermaterial von den Überständen 54, beziehungsweise von den in die Aussparung 46 eingreifenden Mitnahmerippen 44 nicht beeinträchtigt wird.

Wie ferner aus den Figuren 2 bis 5 deutlich wird, ist auf der dem Deckel 14 zugewandten Oberseite der oberen Endscheibe 48 im Bereich jeder Aussparung 46 ein in axialer Richtung abragender Einführsteg 56 vorgesehen. Die Einführstege 56 sind in Seitenansicht, wie insbesondere in Figur 4 und 5 deutlich wird, keilartig ausgebildet. Sie weisen jeweils eine sich in axialer Verlängerung der jeweils zugehörigen Aussparung 46 erstreckenden Einführabschnitt 58 auf, der als Einführhilfe der jeweiligen Mitnahmerippen 44 in die Aussparung 46 dient.

Beim Filterelementwechsel wird zunächst das Filterelement 18 in den Aufnahmeraum 16 eingesetzt. Danach wird der Deckel 14 über das Gewinde 15 auf das Gehäuse 12 aufgeschraubt. Beim Aufschrauben des Deckels 14 treffen die Mitnahmerippen 44 zunächst auf die Einführabschnitte 58 der Einführstege 56. Dadurch wird das Filterelement 18 vom Deckel 14 mitgenommen und um die Längsachse 36 verdreht. Beim weiteren Einschrauben des Deckels 14 gleiten die Mitnahmerippen 44 in axialer Richtung in die Aussparungen 46.

Auf der Innenseite des Deckels 14 sind nicht nur Mitnahmerippen 44, sondern auch Zentrierrippen 60 angeordnet. Vorteilhafterweise ist zwischen zwei Mitnahmerippen 44 jeweils eine Zentrierrippe 60 vorgesehen, wobei die Zentrierrippen 60 ebenfalls äquidistant zueinander angeordnet sein können. Die Zentrierrippen 60 weisen dabei nach radial innen ragende Zentrierabschnitte 62 auf, die das Filterelement 18 im Bereich der oberen Endscheibe 48 beim Einschrauben des Deckels 14 zentrieren. Ferner weisen die Zentrierrippen nach axial unten, also der oberen Endscheibe 48 zugewandte Anlageabschnitte 64 auf, die beim Einschrauben des Deckels 14 gegen die den Deckel 14 zugewandte Endscheibe 48 wirken und das Filterelement 18 nach radial unten drücken.

Wie insbesondere aus Figur 1 und 2 deutlich wird ragen die Mitnahmerippen 44 weiter in die dem Boden 20 des Aufnahmeraums 16 zugewandte Axialrichtung als die Zentrierrippen 60. Dadurch wird erreicht, dass beim Aufsetzen und Einschrauben des Deckels 14 die Mitnahmerippen 44 mit den Einführstegen 56 zusammenwirken, und nicht mit den Zentrierrippen 60.

In der Figur 5 ist die Betriebslage dargestellt, bei der die Mitnahmerippen 44 in die Aussparungen 46 eingreifen und die Anlageabschnitte 64 das Filterelement 18 nach radial unten gegen die Federkraft der Druckfeder 38 beaufschlagen.

## Patentansprüche

1. Ölfilteranordnung (10) mit einem Gehäuse (12), das einen Aufnahmeraum (16) für ein in das Gehäuse (12) einsetzbares, radial mit Öl durchströmbares Filterelement (18) aufweist, mit einem bei eingesetztem Filterelement (18) das Filterelement (18) tragenden Stützrohr (42) und mit einem Deckel (14), der über ein Gewinde (15) auf das Gehäuse (12) aufschraubbar ist, wobei der Deckel (14) Mitnahmerippen (44) zum Mitdrehen des Filterelements (18) beim Auf- beziehungsweise Abschrauben des Deckels (18) auf das Gehäuse (12) beziehungsweise vom Gehäuse (12) aufweist, **dadurch gekennzeichnet, dass** das Stützrohr (42) im oberen und im unteren Endbereich des Filterelements Anlageflächen zum dichten Anliegen des Filterelements (18) vorsieht und derart am Gehäuse (12) befestigt ist, dass es beim Austausch des Filterelements (18) im Gehäuse verbleibt, und dass ein Federelement (38) vorgesehen ist, das bei eingesetztem Filterelement (18) und aufgeschraubtem Deckel (14) das Filterelement (18) gegen den Deckel (14) beaufschlagt.

2. Ölfilteranordnung (10) nach Anspruch 1, **dadurch gekennzeichnet, dass** die Mitnahmerippen (44) im radial äußeren Bereich der Deckelinnenseite angeordnet sind und jeweils einen nach radial innen ragenden Mitnahmeabschnitt (50) aufweisen, der bei eingesetztem Filterelement (18) in am Filterelement (18) dafür vorgesehne Aussparungen (46) eingreift.

3. Ölfilteranordnung (10) nach einem der vorhergehenden Ansprüche, **dadurch gekennzeichnet, dass** im radial äußeren Bereich der Deckelinnenseite Zentrierrippen (60) mit nach radial innen ragenden Zentrierabschnitten (62) vorgesehen sind, die die dem Deckel (14) zugewandte Seite (48) des Filterelements (18) beim Aufsetzen und/oder beim Einschrauben des Deckels (14) in radialer Richtung zentrieren.

4. Ölfilteranordnung (10) nach Anspruch 3, **dadurch gekennzeichnet, dass** die Zentrierrippen (60) nach axial unten ragende Anlageabschnitte (64) aufweisen, die beim Aufsetzen und/oder beim Einschrauben des Deckels (14) gegen die dem Deckel zugewandte Seite (48) des Filterelements (18) wirken.

5. Ölfilteranordnung (10) nach Anspruch 3 oder 4, **dadurch gekennzeichnet, dass** der Zentrierabschnitt (62) und der Anlageabschnitt (64) einer Zentrierrippe aneinander angrenzend angeordnet sind.

6. Ölfilteranordnung (10) nach Anspruch 3, 4 oder 5, **dadurch gekennzeichnet, dass** die Mitnahmerippen (44) die Zentrierrippen (60) bilden und je einen Zentrierabschnitt (62) und/oder einen Anlageabschnitt (64) aufweisen.

7. Ölfilteranordnung (10) nach Anspruch 3, 4, 5 oder 6, **dadurch gekennzeichnet, dass** die Mitnahmerippen (44) bei aufgesetztem Deckel (14) weiter in die dem Boden des Aufnahmeraums (16) zugewandte Axialrichtung (38) ragen als die Zentrierrippen (60).

8. Ölfilteranordnung (10) nach einem der vorhergehenden Ansprüche, **dadurch gekennzeichnet, dass** das Stützrohr (42) oder ein am Stützrohr oder am Gehäuse (12) geführtes Teil (34) einen Anlageabschnitt (40) zur Anlage der dem Deckel abgewandten Seite (43) des Filterelements (18) aufweist.

9. Ölfilteranordnung (10) nach einem der vorhergehenden Ansprüche, umfassend ein Filterelement (18) aufweisend Aussparungen (46) zur Aufnahme am Deckel (14) der Ölfilteranordnung vorgesehenen Mitnahmerippen (44), wobei die Aussparungen (46) eine Breite aufweisen, die gleich oder geringfügig breiter als die Breite der Mitnahmerippen (44) ist, wobei im Bereich einer Aussparung (46) ein in axialer Richtung ragender Einführsteg (56) vorgesehen ist, der einen sich in axialer Verlängerung der Aussparung (46) erstreckenden Einführabschnitt (58) derart aufweist, dass beim Aufschrauben des Deckels (14) eine Mitnahmerippe (44) von dem Einführabschnitt (58) in die zugehörige Aussparungen (46) geführt wird.

10. Ölfilteranordnung (10) nach Anspruch 9, **dadurch gekennzeichnet, dass** eine Aussparung (46) von jeweils zwei in radialer Richtung ragenden Überständen (54) gebildet ist.

11. Ölfilteranordnung (10) nach einem der Ansprüche 9 oder 10, **dadurch gekennzeichnet, dass** die Überstände (54) und/oder der Einführsteg (56) von einer Endscheibe (48) des Filterelements (18) gebildet sind.

## Claims

1. Oil filter arrangement (10) comprising a housing (12), which has a receiving chamber (16) for a filter element (18) which can be inserted into the housing (12) and through which oil can flow radially, comprising a support tube (42) supporting the filter element (18) when the filter element (18) is inserted, and comprising a cover (14) which can be screwed onto the housing (12) via a thread (15), the cover (14) having engaging ribs (44) for concomitantly rotating the filter element (18) when screwing the cover (14) onto the housing (12) or unscrewing the cover (14) from the housing (12), **characterized in that** the support tube (42) provides, in the upper and in the lower end region of the filter element, contact surfaces for tight contact of the filter element (18) and is fastened to the housing (12) in such a way that it remains in the housing when the filter element (18) is replaced, and **in that** a spring element (38) is provided which presses the filter element (18) against the cover (14) when the filter element (18) is inserted and the cover (14) is screwed on.

2. Oil filter arrangement (10) according to Claim 1, **characterized in that** the engaging ribs (44) are arranged in the radially outer region of the inside of the cover and in each case have an engaging section (50) which projects radially inwards and, when the filter element (18) is inserted, engages recesses (46) provided therefor on the filter element (18).

3. Oil filter arrangement (10) according to either of the preceding claims, **characterized in that** centring ribs (60) having centring sections (62) projecting radially inwards are provided in the radially outer region of the inside of the cover, which centring ribs (60) centre that side (48) of the filter element (18) which faces the cover (14) in the radial direction when the cover (14) is mounted and/or screwed in.

4. Oil filter arrangement (10) according to Claim 3, **characterized in that** the centring ribs (60) have contact sections (64) which project axially downwards and, when the cover (14) is mounted and/or screwed in, act against that side (48) of the filter element (18) which faces the cover.

5. Oil filter arrangement (10) according to Claim 3 or 4, **characterized in that** the centring section (62) and the contact section (64) of a centring rib are arranged adjacent to one another.

6. Oil filter arrangement (10) according to Claim 3, 4 or 5, **characterized in that** the engaging ribs (44) form the centring ribs (60) and have one centring section (62) and/or one contact section (64) each.

7. Oil filter arrangement (10) according to Claim 3, 4, 5 or 6, **characterized in that** the engaging ribs (44) project further in the axial direction (38) facing the bottom of the receiving chamber (16) than the centring ribs (60) when the cover (14) is mounted.

8. Oil filter arrangement (10) according to any of the preceding claims, **characterized in that** the supporting tube (42) or a part (34) guided on the supporting tube or on the housing (12) has a contact section (40) for contact with that side (43) of the filter element (18) which faces away from the cover.

9. Oil filter arrangement (10) according to any of the preceding claims, comprising a filter element (18) having recesses (46) for receiving engaging ribs (44) provided on the cover (14) of the oil filter arrangement, the recesses (46) having a width which is equal to or slightly broader than the width of the engaging ribs (44), the region of a recess (46) being provided with an insertion web (56) which projects in the axial direction and has an insertion section (58) extending in the axial extension of the recess (46), in such a way that an engaging rib (44) is guided by the insertion section (58) into the associated recesses (46) when the cover (14) is screwed on.

10. Oil filter arrangement (10) according to Claim 9, **characterized in that** a recess (46) is formed by in each case two protrusions (54) projecting in the radial direction.

11. Oil filter arrangement (10) according to either of Claims 9 and 10, **characterized in that** the protrusions (54) and/or the insertion web (56) are formed by an end disc (48) of the filter element (18).

## Revendications

1. Ensemble filtre à huile (10), avec un carter (12) qui présente un espace de réception (16) pour un élément filtrant (18) pouvant être inséré dans le carter (12) et à travers lequel l'huile peut s'écouler radialement, avec un tube support (42) supportant l'élément filtrant (18) lorsque l'élément filtrant (18) est inséré, et avec un couvercle (14) qui peut être vissé sur le carter (12) par l'intermédiaire d'un filetage (15), dans lequel le couvercle (14) présente des nervures d'entraînement (44) pour entraîner en rotation l'élément filtrant (18) lors du vissage du couvercle (18) sur le carter (12) ou son dévissage du carter (12), **caractérisé en ce que** le tube support (42) prévoit dans la zone d'extrémité supérieure et dans la zone d'extrémité inférieure de l'élément filtrant des surfaces d'appui pour un appui étanche de l'élément filtrant (18) et est fixé au carter (12) de telle sorte qu'il reste dans le carter lorsque l'élément filtrant (18) est remplacé, et **en ce qu'**un élément faisant ressort (38) est prévu qui sollicite l'élément filtrant (18) contre le couvercle (14) lorsque l'élément filtrant (18) est inséré et le couvercle (14) est vissé en place.

2. Ensemble filtre à huile (10) selon la revendication 1, **caractérisé en ce que** les nervures d'entraînement (44) sont disposées radialement dans la zone extérieure du côté intérieur de couvercle et présentent respectivement une portion d'entraînement (50) faisant saillie radialement vers l'intérieur et qui s'engage dans des évidements (46) prévus à cet effet sur l'élément filtrant (18) lorsque l'élément filtrant (18) est inséré.

3. Ensemble filtre à huile (10) selon l'une quelconque des revendications précédentes, **caractérisé en ce que** dans la zone radialement extérieure du côté intérieur de couvercle, des nervures de centrage (60) avec des portions de centrage (62) faisant saillie radialement vers l'intérieur sont prévues qui centrent le côté (48) tourné vers le couvercle (14) de l'élément filtrant (18) lors de la mise en place et/ou du vissage en place du couvercle (14) dans la direction radiale.

4. Ensemble filtre à huile (10), selon la revendication 3, **caractérisé en ce que** les nervures de centrage (60) présentent des portions d'appui (64) faisant saillie axialement vers le bas et qui agissent contre le côté (48), tourné vers le couvercle, de l'élément filtrant (18) lors de la mise en place et/ou du vissage en place du couvercle (14).

5. Ensemble filtre à huile (10) selon la revendication 3 ou 4, **caractérisé en ce que** la portion de centrage (62) et la portion d'appui (64) d'une nervure de centrage sont disposées de façon adjacente l'une à l'autre.

6. Ensemble filtre à huile (10) selon la revendication 3, 4 ou 5, **caractérisé en ce que** les nervures d'entraînement (44) forment les nervures de centrage et présentent respectivement une portion de centrage (62) et/ou une portion d'appui (64).

7. Ensemble filtre à huile (10) selon la revendication 3, 4, 5 ou 6, **caractérisé en ce que** les nervures d'entraînement (44), lorsque le couvercle (14) est mis en place, font saillie dans la direction axiale (38), tournée vers le fond de l'espace de réception (16), plus loin que les nervures de centrage (60).

8. Ensemble filtre à huile (10) selon l'une quelconque des revendications précédentes, **caractérisé en ce que** le tube support (42) ou une pièce (34) guidée sur le tube support ou sur le carter (12) présente une portion d'appui (40) pour l'appui du côté (43), détourné du couvercle, de l'élément filtrant (18).

9. Ensemble filtre à huile (10) selon l'une quelconque des revendications précédentes, comprenant un élément filtrant (18) présentant des évidements (46) pour recevoir des nervures d'entraînement (44) prévues sur le couvercle (14) de l'ensemble filtre à huile, dans lequel les évidements (46) présentent une largeur qui est identique ou légèrement plus large que la largeur des nervures d'entraînement (44), dans lequel, au niveau d'un évidement (46), une entretoise d'introduction (56) faisant saillie dans la direction axiale est prévue qui présente une portion d'introduction (58) s'étendant dans le prolongement axial de l'évidement (46) de telle sorte que lorsque le couvercle (14) est vissé en place, une nervure d'entraînement (44) est guidée par la portion d'introduction (58) dans les évidements associés (46).

10. Ensemble filtre à huile (10) selon la revendication 9, **caractérisé en ce qu'**un évidement est formé par respectivement deux projections (54) faisant saillie dans la direction radiale.

11. Ensemble filtre à huile (10) selon la revendication 9 ou 10, **caractérisé en ce que** les projections (54) et/ou l'entretoise d'introduction (56) sont formées par un disque d'extrémité (48) de l'élément filtrant (18).
